# EUROPÄISCHE PATENTANMELDUNG

(11) **EP 3 639 950 A1**
(43) Veröffentlichungstag der Anmeldung: **22.04.2020**
(21) Anmeldenummer: 19200951.2
(22) Anmeldetag: 02.10.2019
(51) Int. Cl.: B22F 1/00, B22F 3/10, B28B 1/00, C04B 35/638

(54) **VORRICHTUNG ZUR HERSTELLUNG METALLISCHER ODER KERAMISCHER TEILE**

(30) Priorität: 19.10.2018 DE 102018126079
(71) Anmelder: Xerion Berlin Laboratories GmbH, 10587 Berlin (DE)
(72) Erfinder: Lohse, Uwe, 10781 Berlin (DE)
(74) Vertreter: Müller, Wolfram Hubertus

(57) **Zusammenfassung**

Die Erfindung betrifft eine Vorrichtung zur Herstellung metallischer oder keramischer Teile, die eine Druckereinheit (2), eine Entbindereinheit (3) und eine Sintereinheit (4) umfasst. Es ist eine hermetisch geschlossene Prozesskammer (1) vorgesehen, wobei die Druckereinheit (2) in der Prozesskammer (1) angeordnet ist. Die Entbindereinheit (3) ist derart an die Prozesskammer (1) angeschlossen, dass der Grünling (71) von der Prozesskammer (1) aus in die Entbindereinheit (3) einführbar und aus dieser wieder entnehmbar ist, ohne in Kontakt mit der Umgebung zu treten. Die Sintereinheit (4) ist derart an die Prozesskammer angeschlossen (1), dass der Bräunling (72) von der Prozesskammer (1) aus in die Sintereinheit (4) einführbar und aus dieser wieder entnehmbar ist, ohne in Kontakt mit der Umgebung zu treten. Weiter sind in die Prozesskammer (1) Transportmittel integriert zum Transport des Grünlings (71) von der Druckereinheit (2) zur Entbindereinheit (3), zum Transport des Bräunlings (72) von der Entbindereinheit (3) zur Sintereinheit (4) und zum Transport des gesinterten Teils (73) zu einem Ausgang (12) der Prozesskammer (1).

## Beschreibung

Die Erfindung betrifft eine Vorrichtung zur Herstellung metallischer oder keramischer Teile gemäß dem Oberbegriff des Patentanspruchs 1.

Es sind als "Fused Deposition Modeling" (FDM) oder "Fused Filament Fabrication" (FFF) bezeichnete Fertigungsverfahren bekannt, bei denen in einer Druckereinheit ein Filament schichtweise zu einem metallischen oder keramischen Grünling gefertigt wird. Das Filament umfasst dabei ein Metallpulver oder ein Keramikpulver und ist mit einem typischerweise organischen Binder vermischt. Der Grünling wird in an sich bekannter Weise unter Entfernung des Binders entbindert und anschließend in einem Ofen gesintert. Dabei entsteht ein metallisches oder keramisches Teil, das bis zu 99,9 % der Dichte eines aus einem entsprechenden Material gegossenen Teils aufweist.

Der vorliegenden Erfindung liegt die Aufgabe zugrunde, eine Vorrichtung zur Herstellung metallischer oder keramischer Teile bereitzustellen, die in effektiver Weise eine Herstellung eines metallischen oder keramischen Teils mittels der genannten Verfahren ermöglicht.

Diese Aufgabe wird durch eine Vorrichtung mit den Merkmalen des Patentanspruchs 1 und eine Vorrichtung mit den Merkmalen des Patentanspruchs 15 gelöst. Ausgestaltungen der Erfindung sind in den abhängigen Ansprüchen angegeben.

Danach betrachtet die vorliegende Erfindung in einem ersten Erfindungsaspekt eine Vorrichtung zur Herstellung metallischer oder keramischer Teile, die eine Druckereinheit aufweist, in der mindestens ein Filament, das aus einem Metall- oder Keramikpulver vermischt mit einem Binder besteht, schichtweise zu einem metallischen oder keramischen Grünling gefertigt wird.

Die Vorrichtung umfasst des Weiteren eine Entbindereinheit, in der der Grünling unter Entstehung eines Bräunlings entbindert wird, und eine Sintereinheit, in der der Bräunling zu dem herzustellenden Teil gesintert wird.

Gemäß der vorliegenden Erfindung umfasst die erfindungsgemäße Vorrichtung eine hermetisch geschlossene Prozesskammer, in der das herzustellenden Teil zwischen den einzelnen Prozessschritten transportiert wird. Dabei ist in der Prozesskammer die Druckereinheit angeordnet. Die Entbindereinheit ist an die Prozesskammer angeschlossen, wobei der Grünling von der Prozesskammer aus in die Entbindereinheit einführbar und aus dieser wieder entnehmbar ist, ohne in Kontakt mit der Umgebung zu treten. Ebenso ist die Sintereinheit an die Prozesskammer angeschlossen, wobei der Bräunling von der Prozesskammer aus in die Sintereinheit einführbar und aus dieser wieder entnehmbar ist, ohne in Kontakt mit der Umgebung zu treten.

In die Prozesskammer sind des weiteren Transportmittel integriert, die den Grünling von der Druckereinheit zur Entbindereinheit, den Bräunling von der Entbindereinheit zur Sintereinheit und das gesinterte Teil von der Sintereinheit zu einem Ausgang der Prozesskammer transportieren. Diese Transportmittel können dabei aus einer Mehrzahl gesonderter Transportvorrichtungen bestehen, die jeweils dem Transport des Grünlings, des Bräunling und des gesinterten Teils dienen.

Die vorliegende Erfindung beruht danach auf dem Gedanken, sämtliche Prozesse der Herstellung des metallischen oder keramischen Teils in einem hermetisch abgeschlossenen Raum durchzuführen, wobei die Entbindereinheit und die Sintereinheit im geöffneten Zustand einen Teil dieses Raumes bilden und nur während eines Entbinderns oder Sintern gegenüber der Prozesskammer geschlossen sind.

Eine solche Lösung vereinigt mehrere Vorteile. Ein erster Vorteil besteht darin, dass die Qualität der Herstellung verbessert wird, da das herzustellenden Teil die Gasatmosphäre der Prozesskammer nicht verlässt. Beispielsweise kann der gesamte Prozess unter einer im Umlauf gereinigten Schutzgasatmosphäre oder unter Vakuum stattfinden. Ein zweiter Vorteil besteht in einer stärkeren Automatisierung, da das herzustellenden Teil automatisch zwischen Druckereinheit, Entbindereinheit und Sintereinheit transportiert wird. Statt in bisher drei getrennten Arbeitsschritten erfolgt die Herstellung des Teils in einem Arbeitsschritt. Ein dritter Vorteil besteht in in den äußerst kompakten Abmessungen dieses Systems gegenüber vergleichbaren Einzelmaschinen.

Eine Ausgestaltung der Erfindung sieht vor, dass in der Prozesskammer ein Vorrat an Filament für die Druckereinheit lagerbar ist. Dieser Vorrat wird von Zeit zu Zeit aufgefüllt, indem das Material über eine Schleuse in die Prozesskammer eingebracht wird.

Gemäß einer weiteren Ausgestaltung der Erfindung ist vorgesehen, dass die Druckereinheit den Grünling auf einer Druckplattform herstellt, die auf einem Druckbett der Druckereinheit angeordnet wird. Dies ist mit dem Vorteil verbunden, dass der Grünling auf dem Druckbett des Druckers, auf dem der Grünling ohne eine solche Druckplattform angeordnet wäre, nicht aufwendig und mit der Gefahr einer Beschädigung entfernt werden muss. So haftet der Grünling typischerweise am Druckbett an. Die Druckplattform kann dagegen in einfacher Weise vom Druckbett entfernt werden.

Dabei kann vorgesehen sein, eine Eingangsschleuse bereitzustellen, über die die Druckplattform in die Prozesskammer eingeführt werden kann, ohne deren hermetisch abschließende Qualität zu zerstören.

Es ist vorgesehen, dass die Druckplattform zusammen mit dem Grünling zur Entbindereinheit transportiert wird. Dabei besteht die Druckplattform bevorzugt aus einer chemisch auflösbaren Substanz, die sich beim Prozess des Entbinderns des Grünlings auflöst. Die Druckplattform wird somit beim Entbinderns aufgelöst und dadurch dem Prozess entnommen.

Zur Bereitstellung der Druckplattform in der Druckereinheit bestehen mehrere Möglichkeiten. Eine Möglichkeit besteht darin, dass diese Druckplattform über ein zusätzliches Filament direkt vom Drucker generiert wird. Bei dem zusätzlichen Filament handelt es sich beispielsweise um ein Filament aus Kunststoff, das zur Generierung der Druckplattform eingesetzt wird. Das Filament besteht dabei aus einem Kunststoff, der sich während des Entbindervorgangs in dem Lösungsmittel auflöst. Eine weitere Möglichkeit besteht darin, dass die Druckplattform über einen Eingang der Prozesskammer und anschließend der Druckereinheit zuführbar ist.

Gemäß einer weiteren Ausgestaltung der Erfindung ist vorgesehen, dass die Entbindereinheit unterhalb der Prozesskammer angeordnet und der Entbindereinheit eine vertikal bewegliche Plattform zugeordnet ist, die aus der Prozesskammer in die Entbindereinheit vertikal absenkbar und aus dieser vertikal wieder hochfahrbar ist. Dabei sind die Transportmittel dazu vorgesehen und ausgebildet, den Grünling von der Druckereinheit zu der vertikal beweglichen Plattform zu transportieren. Die vertikal bewegliche Plattform stellt dabei ebenfalls ein Transportmittel dar.

Diese Ausgestaltung der Erfindung ermöglicht es, den Grünling direkt von der Prozesskammer in die Entbindereinheit einzubringen. Die Entbindereinheit weist dabei zunächst den gleichen Druck, die gleich Temperatur und die gleiche Atmosphäre wie die Prozesskammer auf. Erst nach Einbringen des Grünlings in die Entbindereinheit wird diese hermetisch verschlossen. Bei dem dann einsetzenden Entbinderprozess kann in der Entbindereinheit eine andere Atmosphäre, eine andere Temperatur und/oder ein anderer Druck herrschen als in der Prozesskammer. Dabei ist vorgesehen, dass beim Entbinderprozess die Prozesskammer mit einer Flüssigkeit gefüllt wird, die den im Grünling enthaltenen Binder auflöst. Hierbei handelt es sich beispielsweise um Aceton oder eine andere geeignete Flüssigkeit. Nach dem Entbindern wird die Entbindereinheit geöffnet und bildet wieder Teil des Innenraums der Prozesskammer.

Eine weitere Möglichkeit der Entbinderung besteht in der bekannten katalytischen Route, bei der der Binder durch die Anwesenheit von siedender Salpetersäure entfernt wird.

Falls die Zusammensetzung des Metall-/Keramikfilamentes und die Bauteilgröße es erlauben, kann auf den Entbinderschritt vollständig verzichtet werden und der Binder wird rein thermisch beim Hochheizen auf die Sintertemperatur im Sinterofen ausgetrieben. Für diesen Fall wird der Grünling von der Druckereinheit direkt zur Sintereinheit transportiert. Dabei wird von der Verwendung einer Druckplattform, auf der der Grünling gedruckt wird die sich beim Prozess des Entbinderns des Grünlings auflösen würde, abgesehen. Beispielsweise wird der Grünling direkt auf einem Druckbett der Druckereinheit gedruckt.

Zur hermetischen Abdichtung der Entbindereinheit gegenüber der Prozesskammer während des Vorgangs des Entbinderns sieht eine Ausgestaltung vor, dass die genannte Plattform einen hermetisch abdichtenden Rand aufweist, der nach Absenken der Plattform in die Entbindereinheit die Entbindereinheit abdichtet.

Die Transportmittel zum Transportieren des Grünlings von der Druckereinheit zur vertikal beweglichen Plattform können auf verschiedene Weise ausgestaltet sein. Eine Ausgestaltung hierzu sieht vor, dass das Druckbett der Druckereinheit horizontal bewegbar ausgebildet ist, wobei der Grünling nach seiner Herstellung durch ein horizontales Verschieben des Druckbetts der vertikal beweglichen Plattform zugeführt wird. Dabei kann ergänzend auch eine gesonderte Vorrichtung zum Platzieren des Grünlings auf der vertikal beweglichen Plattform vorgesehen sein. Eine solche Vorrichtung kann beispielsweise durch ein Gebläse bereitgestellt werden, das mittels Druckluft den Grünling auf der vertikal beweglichen Plattform platziert, oder durch einen Roboter bereitgestellt werden, der den Grünling vom Druckbett der Druckereinheit entnimmt und auf der Plattform platziert. Weitere Ausgestaltungen sehen den Einsatz von Förderbändern und dergleichen vor.

Gemäß einer Ausgestaltung der Erfindung umfasst die Sintereinheit einen linear beweglichen Boden, der der Aufnahme des Bräunlings dient und über dessen Verfahren der Bräunling in die Sintereinheit eingebracht und aus dieser wieder heraustransportiert werden kann. Dabei sind die Transportmittel dazu vorgesehen und ausgebildet, den Bräunling von der Entbindereinheit bzw. von der vertikal beweglichen Plattform zu dem beweglichen Boden der Sintereinheit zu transportieren.

Eine Ausgestaltung hierzu sieht vor, dass der bewegliche Boden einen hermetisch abdichtenden Rand aufweist, der nach Einbringen des Bräunlings in die Sintereinheit die Sintereinheit gegenüber der Prozesskammer automatisch hermetisch abgedichtet. Dabei weist die Sintereinheit vor dem Einführen des Bräunlings zunächst den gleichen Druck, die gleiche Temperatur und die gleiche Atmosphäre wie die Prozesskammer auf. Nach dem Verschließen der Sintereinheit wird die Temperatur auf einen Wert von bis zu 1.900 °C erhöht. Dabei kann zusätzlich eine andere Atmosphäre in der Sintereinheit bereitgestellt werden. Nach dem Sintern wird die Sintereinheit geöffnet, um das gesinterte Teil zu entnehmen und in die Prozesskammer zurück zu transportieren. Die Sintereinheit insofern dann wieder einen Teil des Innenraums der Prozesskammer.

Der bewegliche Boden ist beispielsweise in vertikaler Richtung verfahrbar, wobei die Sintereinheit oberhalb oder unterhalb der Prozesskammer angeordnet ist.

Weiter sind Transportmittel vorhanden, die das gesinterte Teil von dem beweglichen Boden zu dem Ausgang der Prozesskammer transportieren. Eventuell kann sich vor der Ausgangsschleuse ein Ablagetableau befinden, um die fertigen Teile zunächst in der Prozesskammer zu sammeln und die Schleuse nur selten öffnen zu müssen.

Die Teile werden über eine hermetisch dichte Schleuse manuell oder automatisch aus der Prozesskammer prozessiert.

Eine weitere Ausgestaltung der Erfindung sieht vor, dass sämtliche Transportmittel, die in der Prozesskammer angeordnet sind, in Ruheposition in der der gleichen horizontalen Ebene liegen. Es wird hierdurch eine Transferebene der Prozesskammer definiert, in der Grünling und Bräunling sowie das gesinterte Teil von Bearbeitungsstation zu Bearbeitungsstation bzw. zum Ausgang transportiert werden.

Eine weitere Ausgestaltung der Erfindung sieht vor, dass der Grünling bzw. Bräunling auf derselben Transportunterlage zwischen den einzelnen Einheiten der Prozesskammer transportiert wird. Dieselbe Transportunterlage wird somit dafür verwendet,
- den Grünling in der Druckereinheit herzustellen (wobei die Herstellung direkt auf der Transportunterlage oder alternativ auf einer auf der Transportunterlage angeordneten Druckplattform erfolgen kann),
- den Grünling von der Druckereinheit zur Entbindereinheit zu transportieren, in die Entbindereinheit einzuführen und aus dieser wieder zu entnehmen,
- den Bräunling weiter zur Sintereinheit zu transportieren, in die Sintereinheit einzuführen und aus dieser wieder zu entnehmen, und
- den Bräunling bis zum Ausgang der Prozesskammer weiter zu transportieren.

Eine solche Ausgestaltung ist mit dem Vorteil verbunden, dass der Grünling bzw. der Bräunling nicht zwischen den verschiedenen Stationen auf unterschiedliche Unterlagen gehoben oder in anderer Weise platziert werden muss.

Dabei kann vorgesehen sein, dass die Transportunterlage in der gleichen horizontalen Ebene verbleibt (abgesehen von einem Einführen in die Entbindereinheit und die Sintereinheit), so dass nur eine Transferebene realisiert ist.

Bei der Transportunterlage handelt es sich beispielsweise um ein Druckbett der Druckereinheit oder eine auf dem Druckbett angeordnete weitere Unterlage.

Die Verwendung einer gleichbleibenden Transportunterlage schließt dabei nicht aus, dass entsprechend dem erläuterten Ausführungsbeispiel der Grünling auf einer Druckplattform hergestellt wird, die sich während des Prozesses des Entbinderns wieder auflöst. Die Verwendung einer solchen Druckplattform weist dabei unter anderem den Vorteil auf, dass mögliche Unebenheiten und Deformationen der Transportunterlage durch die Druckplattform ausgeglichen werden können.

Eine weitere Ausgestaltung der Vorrichtung sieht vor, dass eine Bedieneinheit bzw. Mensch-Maschine-Schnittstelle zur Bedienung der Komponenten der Vorrichtung außerhalb der Prozesskammer angeordnet ist, so dass die Bedienung der Vorrichtung die hermetisch dichte Abriegelung der Prozesskammer nicht tangiert.

In einem weiteren Erfindungsaspekt gemäß dem nebengeordneten Patentanspruch 20 betrifft die vorliegende Erfindung eine Vorrichtung zur Herstellung metallischer oder keramischer Teile, die aufweist:
- eine Druckereinheit, in der mindestens ein Filament, das aus einem Metall- oder Keramikpulver vermischt mit einem Binder besteht, schichtweise zu einem metallischen oder keramischen Grünling gefertigt wird, und
- eine Sintereinheit, in der der Grünling zu dem herzustellenden Teil gesintert wird.

Dabei ist eine hermetisch geschlossene Prozesskammer vorgesehen, wobei die Druckereinheit in der Prozesskammer angeordnet ist, die Sintereinheit an die Prozesskammer angeschlossen ist und der Grünling von der Prozesskammer aus in die Sintereinheit einführbar und aus dieser wieder entnehmbar ist, und wobei in die Prozesskammer Transportmittel integriert sind zum Transport des Grünlings von der Druckereinheit zur Sintereinheit und zum Transport des gesinterten Teils zu einem Ausgang der Prozesskammer.

Diese Erfindungsvariante unterscheidet sich von der Erfindungsvariante des Anspruchs 1 dadurch, dass die Vorrichtung keine Entbindereinheit umfasst. Eine solche Vorrichtung kann vorgesehen werden, wenn aufgrund des Materials des verwendeten Filaments und/oder der Größe des herzustellenden Bauteils es nicht erforderlich ist, einen gesonderten Entbinderschritt vorzunehmen. Bei dieser Erfindungsvariante wird der Binder rein thermisch beim Hochheizen auf die Sintertemperatur im Sinterofen ausgetrieben.

Die in den abhängigen Ansprüchen 2 bis 19 angegebenen Erfindungsvarianten gelten in entsprechender Weise auch für die Vorrichtung des Anspruchs 20.

Die Erfindung wird nachfolgend unter Bezugnahme auf die Figur der Zeichnung anhand eines Ausführungsbeispiels näher erläutert. Dabei zeigen:
- Fig. 1: eine schematische Darstellung der Komponenten einer erfindungsgemäßen Vorrichtung zur Herstellung eines metallischen oder keramischen Teils; und
- Fig. 2: eine vergrößerte Darstellung von Komponenten der Druckereinheit, der Entbindereinheit und der Sintereinheit der Vorrichtung der Figur 1.

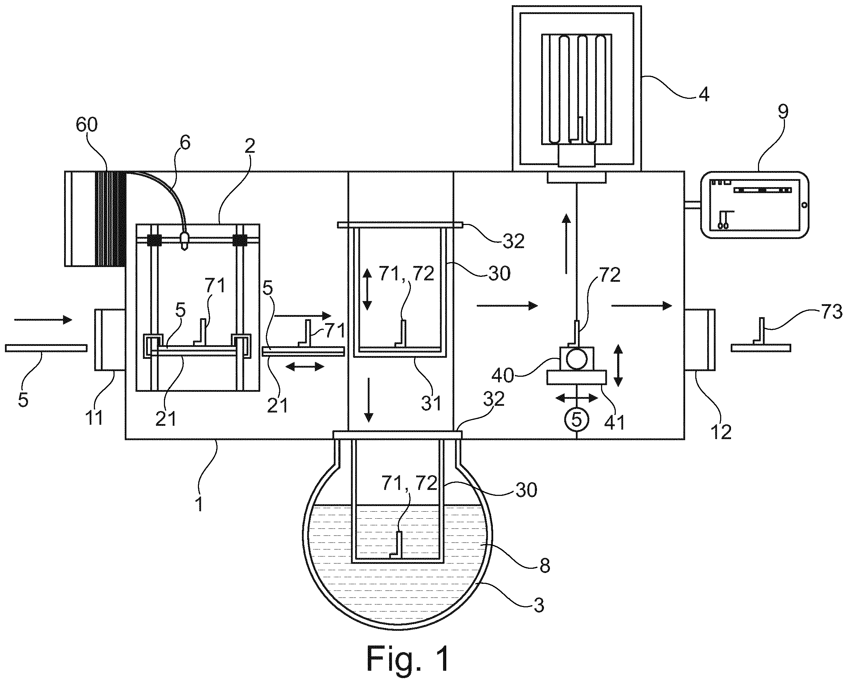

Gemäß der Figur 1 umfasst die Vorrichtung als Hauptkomponenten eine Prozesskammer 1, eine Druckereinheit 2, eine Entbindereinheit 3 und eine Sintereinheit 4. Die Entbindereinheit 3 und die Sintereinheit 4 befinden sich dabei zwar nicht unmittelbar in der Prozesskammer 1. Sie grenzen aber in dem Sinn an die Prozesskammer 1 an, als ein Grünling oder Bräunling von der Prozesskammer aus in die Entbindereinheit 3 und die Sintereinheit 4 eingeführt und wieder herausgeführt werden kann, ohne dabei die Prozesskammer 1 zu verlassen. Dabei sind Entbindereinheit 3 und Sintereinheit 4 hermetisch von der Prozesskammer abschließbar, wenn ein Entbindern oder ein Sintern erfolgt. Beim Zuführen eines Grünlings oder Bräunlings bzw. bei dessen Entfernen ist die Atmosphäre in der Entbindereinheit 3 bzw. in der Sintereinheit 4 dagegen mit der Atmosphäre der Prozesskammer verbunden.

Die Prozesskammer 1 umfasst einen Eingang 11 und einen Ausgang 12. Beide sind bevorzugt mit einer Schleuse ausgebildet, damit ein Teil auch in dem Zustand, in dem die Prozesskammer 1 hermetisch gegenüber der Umgebung abgedichtet ist, in die Prozesskammer 1 eingeführt bzw. aus dieser entnommen werden kann.

Ein Teil, das über den Eingang 11 in die Prozesskammer 1 eingeführt wird, ist beispielsweise eine Druckplattform 5, deren Aufbau und Verwendung noch erläutert wird. Das Teil, das die Prozesskammer 1 durch den Ausgang 12 verlässt, ist das fertig gesinterte Teil, dass ein Metallteil oder ein Keramikteil ist.

Die Prozesskammer 1 ist wie erwähnt hermetisch gegenüber der Umgebung geschlossen, d. h. es erfolgt kein Gasaustausch mit der Umgebung. Des Weiteren kann vorgesehen sein, dass die Temperatur und die Gaszusammensetzung im Inneren der Prozesskammer 1 eingestellt bzw. gesteuert werden können. Ausführungsvarianten sehen dabei vor, dass die Prozesskammer 1 mit einem Schutzgas wie zum Beispiel Stickstoff oder Helium befüllbar ist.

Die Druckereinheit 2 dient dazu, ein Filament 6, das aus einem Metall- oder Keramikpulver vermischt mit einem Binder besteht, schichtweise zu einem metallischen oder keramischen Grünling 71 zu fertigen. Das Filament 6 wird der Druckereinheit 2 von einer Rolle 60 zugeführt. Dabei kann vorgesehen sein, dass die Rolle 60 sich innerhalb der Prozesskammer 1 befindet. Dabei kann vorgesehen sein, dass mehrere Filamente parallel oder sequenziell eingesetzt werden, wobei die unterschiedlichen Filamente eine unterschiedliche Materialzusammensetzung aufweisen können.

Die Druckereinheit 2 umfasst ein Druckbett 21, auf dem der Grünling 71 durch 3D-Druck bzw. schichtweises Auftragen des Filamentmaterials in einem FDM- oder FFF-Fertigungsverfahren hergestellt wird. Gemäß dem dargestellten Ausführungsbeispiel ist dabei vorgesehen, dass auf das Druckbett 21 die Druckplattform 5 aufgelegt wird und der 3D-Druck zur Herstellung des Grünlings 71 auf der Druckplattform 5 erfolgt. Dies ist mit dem Vorteil verbunden, dass der Grünling 21 nicht an dem Druckbett 21 anhaften kann.

Die Druckereinheit 2 ist nur schematisch dargestellt. Grundsätzlich kann jede beliebige Druckereinheit eingesetzt werden, die das Drucken eines Grünlings 71 aus dem zugeführten Filament 6 ermöglicht. Ausführungsvarianten hierzu sehen vor, dass es sich um einen 3-Achsen-Drucker handelt. Als Druckbett 21 wird beispielsweise eine Keramikplatte mit einem Heizelement verwendet. Als Filament 6 wird beispielsweise ein oder mehrere Filamente mit einem Durchmesser im Bereich zwischen 1,5 mm und 3 mm eingesetzt. Der Düsendurchmesser der Druckdüse der Druckereinheit 2 liegt beispielsweise bei 0,3 mm, 0,4 mm oder 0,5 mm.

Die Entbindereinheit 3 ist dazu ausgebildet und vorgesehen, eine entbindende Flüssigkeit 8 aufzunehmen. Bei der Entbindeflüssigkeit handelt es sich beispielsweise um Aceton oder Isopropylalkohol. Der Entbindereinheit 3 ist eine vertikal bewegliche Plattform 30, die als Fahrstuhl bezeichnet werden kann, zugeordnet, die eine Auflagefläche 31 aufweist. Des Weiteren umfasst die bewegliche Plattform 30 einen hermetisch abdichtenden Rand 32. Die vertikal bewegliche Plattform 30 kann in die unterhalb der Prozesskammer 1 angeordnete Entbindereinheit 3 abgesenkt werden. Dabei taucht der Grünling 71 in die Flüssigkeit 8 ein. Die Verweildauer des Grünlings 71 in der Flüssigkeit 8 hängt von den Prozessparametern ab. Sie kann bis zu 24 Stunden betragen. Während des Entbinderns werden die Temperatur und die Atmosphärenzusammensetzung innerhalb der Entbindereinheit 3 gesteuert. Dabei kann ein Schutzgas, beispielsweise Stickstoff in die Entbindereinheit 3 eingeführt werden. Weiter kann in die Entbindereinheit eine Heizung zur Einstellung einer gewünschten Temperatur des Lösemittels integriert sein.

In der Sintereinheit 4 wird das der Entbindereinheit 8 entnommene Teil, das nun einen Bräunling 72 darstellt, gesintert. Dies erfolgt bei Reparaturen von bis zu 1900 °C. Zum Einbringen des Bräunlings 72 in die Sintereinheit 4 ist ein beweglicher Boden 40 vorgesehen, der der der Aufnahme des Bräunling 72 dient. Der bewegliche Boden 40 ist vertikal verfahrbar, so dass der Bräunling 72 in die Sintereinheit 4 eingebracht werden kann. Ein derartiger Ofentyp wird auch als Hubbodenofen bezeichnet, wobei der Boden 40 den Hubboden darstellt. Dabei weist der bewegliche Boden 40 einen hermetisch abdichtenden Rand 41 auf, so dass nach Einbringen des Bräunlings 72 in die Sintereinheit diese gegenüber der Prozesskammer 1 hermetisch abgeschlossen wird.

Während des Sinterns kann eine Schutzgasatmosphäre in die Sintereinheit 4 eingeleitet werden. Die Sintereinheit 4 wird beispielsweise elektrisch beheizt. Als Atmosphären können beispielsweise Stickstoff, Wasserstoff, Vakuum und Luft bereitgestellt werden. Der in der Sintereinheit 4 einstellbare Druck liegt beispielsweise im Bereich zwischen 10 und 500 mbar.

Der Ausgang 12 der Prozesskammer 1 dient dazu, das fertig gesinterte Teil 73 zur Entnahme bereitzustellen. Dabei kann vorgesehen sein, dass der Ausgang 12 mit einer Schleuse versehen ist.

Die Vorrichtung umfasst des Weiteren Transportmittel, die der Beförderung des Grünlings 71 bzw. Bräunling 72 bzw. des gesinterten Teils 73 innerhalb der Prozesskammer 1 dienen. Solche Transportmittel sind in der Figur 1 nicht gesondert dargestellt. Es kann dabei auf dem Fachmann bekannte Transportmittel wie zum Beispiel Förderbänder oder dergleichen zurückgegriffen werden. Auch ist es möglich, innerhalb der Prozesskammer einen oder mehrere Roboter anzuordnen, die jeweils den Grünling oder Bräunling greifen und für den nächsten Prozessschritt platzieren. Die Plattform 30 und der Hubboden 40 können über nicht dargestellte Motoren und Getriebe vertikal und/oder horizontal verfahrbar sein.

Die Transportmittel befinden sich bevorzugt innerhalb einer horizontalen Transferebene der Prozesskammer 1, so dass es lediglich erforderlich ist, den Grünling bzw. Bräunling bzw. des gesinterte Teil in horizontaler Richtung zwischen der Druckereinheit 1, der vertikalen Plattform 30, dem Boden 40 und dem Ausgang 12 zu transportieren.

Die einzelnen Prozessschritte können über eine Mensch-Maschine-Schnittstelle 9 gesteuert werden, die außerhalb der Prozesskammer 1 angeordnet ist.

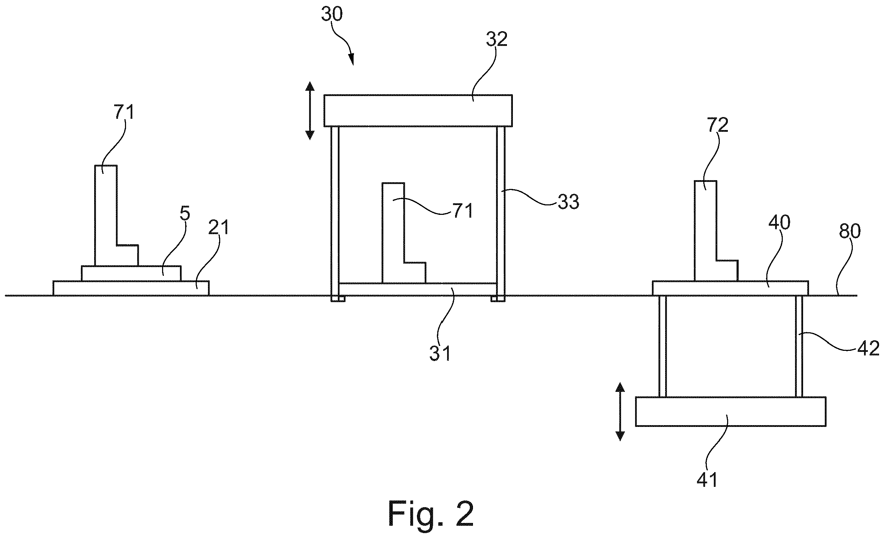

Die Figur 2 zeigt in vergrößerter Darstellung einzelne der Komponenten der Vorrichtung der Figur 1.

Im Hinblick auf die Druckereinheit 2 sind das Druckbett 21, die Druckplattform 5 und der Grünling 71 dargestellt. Das Druckbett 21 ist hochtemperaturfest ausgebildet. Die Druckplattform 5 kann wie ausgeführt beim Entbindern wieder entfernt werden. Sie wird in einer Ausführungsvariante mittels eines gesonderten Filaments aus Kunststoff durch die Druckereinheit 2 selbst hergestellt, d. h. die Druckereinheit 2 ist in einem solchen Fall mit mindestens zwei unterschiedlichen Filamenten ausgestattet, mindestens einem Filament, das aus einem Metall- oder Keramikpulver vermischt mit einem Binder besteht, und einem Filament aus Kunststoff, der sich während des Entbindervorgangs im Lösungsmittel auflöst.

Im Hinblick auf die Entbindereinheit ist die vertikal bewegliche Plattform 30 dargestellt, die die vertikal bewegliche Auflagefläche 31 umfasst. Der hermetisch abdichtende Rand 32, der einen Flansch bildet, ist über ein Hängegerüst 33 mit der Ablagefläche 31 verbunden.

Im Hinblick auf die Sintereinheit ist der vertikal bewegliche Boden 40 dargestellt, auf dem sich der Bräunling 72 befindet. Der hermetisch abdichtende Rand 41, der einen Flansch bildet, ist über ein Stehgerüst 42 mit dem beweglichen Boden 40 verbunden.

Das Druckbett 21, die Auflagefläche 31 und der bewegliche Boden 40 befinden sich in ihrer Ruheposition in der gleichen horizontalen Ebene 80, die eine Transferebene der Prozesskammer definiert, in der der Grünling und der Bräunling sowie das gesinterte Teil von Bearbeitungsstation zu Bearbeitungsstation und dann zum Ausgang transportiert werden.

Die Betriebsweise der Vorrichtung zur Herstellung eines metallischen oder keramischen Teils ist wie folgt.

Zunächst wird die bewegliche Druckplattform 5 über den Eingang 11 in die Prozesskammer 1 eingeschleust. Alternativ ist eine Anzahl solcher Druckplattformen 5 innerhalb der Prozesskammer 1 gelagert, so dass hierauf zurückgegriffen werden kann. Die Druckplattform 5 wird auf dem Druckbett 21 der Druckereinheit 21 platziert. Unter Verwendung des Filaments 6 wird anschließend durch die Druckereinheit 21 ein Grünling 71 gedruckt.

Der Grünling 71 wird anschließend zusammen mit der Druckplattform 5 zur vertikal verschiebbaren Plattform 30 transportiert und auf deren Auflagefläche 31 aufgelegt. Zum Transport von Druckplattform 5 und Grünling 71 kann vorgesehen sein, dass das Druckbett 21 horizontal verschiebbar ausgebildet ist und von der Druckereinheit 2 zur Plattform 30 verschoben werden kann. Vor der vertikal verschiebbaren Plattform 30 werden Druckplattform 5 und Grünling 71 auf die Auflagefläche 31 gehoben. Dies kann beispielsweise über ein nicht dargestelltes Gebläse erfolgen.

Die vertikal verschiebbare Plattform 30 wird daraufhin in die Entbindereinheit 3 abgesenkt. Druckplattform 5 und Grünling 71 tauchen dabei in das Lösemittel ein. Bei dem nun stattfindenden Prozess des Entbinderns wandelt sich der Grünling 71 zu einem Bräunling 72. Gleichzeitig wird die Druckplattform 5 aufgelöst. Nach Beendigung des Entbinderns wird die vertikal verschiebbaren Plattform 30 nach oben verfahren und wird anschließend der nun entstandene Bräunling 72 auf die Oberfläche des Hubbodens 40 transportiert. Dies kann beispielsweise dadurch erfolgen, dass die Plattform 30 auch vertikal verschiebbar ist, oder durch nicht dargestellte Förderbänder oder dergleichen.

Nach Platzierung auf der Oberfläche des Hubbodens 40 wird dieser vertikal verfahren, so dass der Grünling für das nun folgende Sintern in die Sintereinheit 4 eingebracht wird. Nach dem Sintern wird der Hubboden 40 wieder abgesenkt und das gesinterte Teil 73 zum Ausgang 12 befördert. Dies kann beispielsweise erfolgen, indem der Boden 40 ebenfalls horizontal verfahrbar ist.

Gemäß einer Ausführungsvariante der Vorrichtung und des Verfahrens verbleibt der Grünling 71 bzw. der Bräunling 72 stets auf derselben Transportunterlage, die beispielsweise durch das Druckbett 21 der Druckereinheit 2 gebildet wird. Dabei wird das Druckbett 21 mit der Druckplattform 5 und dem Grünling 71 zur verschiebbaren Plattform 30 transportiert und von dieser aufgenommen, so dass die Auflagefläche 31 der Plattform 30 durch das Druckbett 21 gebildet wird. Nach dem Entbindern (bei dem sich die Druckplattform 5 auflöst) wird das Druckbett 21 mit dem Bräunling 72 zum Hubboden 40 transportiert, wobei das Druckbett 21 den Hubboden 40 bildet. Diese Ausführungsvariante vereinfacht den Transport des Grünlings 71 und des Bräunling 72 innerhalb der Prozesskammer durch Verwendung nur einer Transportunterlage.

Eine Verfahrensvariante sieht vor, dass die Entbindereinheit 3 übergangen wird, d. h. der Grünling wird von der Druckereinheit 2 direkt zur Sintereinheit 4 transportiert. Diese vereinfachte Verfahrensvariante kann in solchen Fällen implementiert werden, in denen es ausreichend ist, den Binder rein thermisch beim Hochheizen auf die Sintertemperatur in der Sintereinheit auszutreiben. Dies ist abhängig von der Bauteilgröße und der Zusammensetzung des Metall-/Keramikfilaments.

Hierzu ist auch eine Variation der Vorrichtung selbst möglich, und zwar dahingehend, dass die Vorrichtung ohne die Entbindereinheit ausgeführt wird. Der Grünling wird in einem solchen Fall von der Druckereinheit 2 direkt zur Sintereinheit 4 transportiert.

Es versteht sich, dass die Erfindung nicht auf die oben beschriebenen Ausführungsformen beschränkt ist und verschiedene Modifikationen und Verbesserungen vorgenommen werden können, ohne von den hier beschriebenen Konzepten abzuweichen. Weiter wird darauf hingewiesen, dass beliebige der beschriebenen Merkmale separat oder in Kombination mit beliebigen anderen Merkmalen eingesetzt werden können, sofern sie sich nicht gegenseitig ausschließen. Die Offenbarung dehnt sich auf alle Kombinationen und Unterkombinationen eines oder mehrerer Merkmale aus, die hier beschrieben werden und umfasst diese. Sofern Bereiche definiert sind, so umfassen diese sämtliche Werte innerhalb dieser Bereiche sowie sämtliche Teilbereiche, die in einen Bereich fallen.

## Patentansprüche

1. Vorrichtung zur Herstellung metallischer oder keramischer Teile, die aufweist:
- eine Druckereinheit (2), in der mindestens ein Filament (6), das aus einem Metall- oder Keramikpulver vermischt mit einem Binder besteht, schichtweise zu einem metallischen oder keramischen Grünling (71) gefertigt wird,
- eine Entbindereinheit (3), in der der Grünling (71) unter Entstehung eines Bräunlings (72) entbindert wird, und
- eine Sintereinheit (4), in der der Bräunling (72) zu dem herzustellenden Teil (73) gesintert wird,
**gekennzeichnet durch**
eine hermetisch geschlossene Prozesskammer (1), wobei
- die Druckereinheit (2) in der Prozesskammer (1) angeordnet ist,
- die Entbindereinheit (3) derart an die Prozesskammer (1) angeschlossen ist, dass der Grünling (71) von der Prozesskammer (1) aus in die Entbindereinheit (3) einführbar und aus dieser wieder entnehmbar ist, ohne in Kontakt mit der Umgebung zu treten,
- die Sintereinheit (4) derart an die Prozesskammer angeschlossen (1) ist, dass der Bräunling (72) von der Prozesskammer (1) aus in die Sintereinheit (4) einführbar und aus dieser wieder entnehmbar ist, ohne in Kontakt mit der Umgebung zu treten, und wobei
- in die Prozesskammer (1) Transportmittel integriert sind zum Transport des Grünlings (71) von der Druckereinheit (2) zur Entbindereinheit (3), zum Transport des Bräunlings (72) von der Entbindereinheit (3) zur Sintereinheit (4) und zum Transport des gesinterten Teils (73) zu einem Ausgang (12) der Prozesskammer (1).

2. Vorrichtung nach Anspruch 1, **dadurch gekennzeichnet, dass** die Prozesskammer (1) derart ausgestaltet ist, dass in ihr ein Vorrat an Filament (6) für die Druckereinheit (2) lagerbar ist.

3. Vorrichtung nach Anspruch 1 oder 2, **dadurch gekennzeichnet, dass** die Druckereinheit (2) den Grünling (71) auf einer Druckplattform (5) herstellt, die auf einem Druckbett (21) der Druckereinheit (2) angeordnet wird,
- wobei die Transportmittel dazu vorgesehen und ausgebildet sind, die Druckplattform (5) zusammen mit dem Grünling (71) zur Entbindereinheit (3) zu transportieren, und
- die Druckplattform (5) aus einer chemisch auflösbaren Substanz besteht, die sich beim Prozess des Entbinderns des Grünlings (71) auflöst.

4. Vorrichtung nach Anspruch 3, **dadurch gekennzeichnet, dass** die Druckplattform (5) unter Verwendung eines zusätzlichen Filaments durch die Druckereinheit (2) erzeugbar ist.

5. Vorrichtung nach einem der vorangehenden Ansprüche, **dadurch gekennzeichnet, dass** die Entbindereinheit (3) unterhalb der Prozesskammer (1) angeordnet und der Entbindereinheit (3) eine vertikal bewegliche Plattform (30) zugeordnet ist, die aus der Prozesskammer (1) in die Entbindereinheit (3) vertikal absenkbar und aus dieser vertikal wieder hochfahrbar ist, wobei die Transportmittel dazu vorgesehen und ausgebildet sind, den Grünling (71) von der Druckereinheit (2) zu der vertikal beweglichen Plattform (30) zu transportieren.

6. Vorrichtung nach Anspruch 5, **dadurch gekennzeichnet, dass** die Plattform (30) einen hermetisch abdichtenden Rand (32) aufweist, der nach Absenken der Plattform in die Entbindereinheit (3) die Entbindereinheit (3) gegenüber der Prozesskammer (1) hermetisch abgedichtet.

7. Vorrichtung nach Anspruch 5 oder 6, **dadurch gekennzeichnet, dass** die Transportmittel zum Transportieren des Grünlings (71) von der Druckereinheit (2) zur vertikal beweglichen Plattform (30) ein horizontal bewegbares Druckbett (21) der Druckereinheit (2) und/oder eine Vorrichtung zum Platzieren des Grünlings auf der vertikal beweglichen Plattform (30) umfassen.

8. Vorrichtung nach Anspruch 7, **dadurch gekennzeichnet, dass** die Transportmittel als Vorrichtung zum Platzieren des Grünlings (71) ein Gebläse umfassen, das mittels Druckluft den Grünling auf der vertikal beweglichen Plattform (30) platziert.

9. Vorrichtung nach Anspruch 7, **dadurch gekennzeichnet, dass** die Transportmittel als Vorrichtung zum Platzieren des Grünlings (7) auf der vertikal beweglichen Plattform (30) einen Roboter umfassen, der den Grünling vom Druckbett (21) der Druckereinheit (2) entnimmt und auf der Plattform (30) platziert.

10. Vorrichtung nach einem der vorangehenden Ansprüche, **dadurch gekennzeichnet, dass** die Sintereinheit (4) einen linear beweglichen Boden (40) umfasst, der der Aufnahme des Bräunlings (72) dient und über dessen Verfahren der Bräunling (72) in die Sintereinheit (4) eingebracht und aus dieser wieder heraustransportiert werden kann, wobei die Transportmittel dazu vorgesehen und ausgebildet sind, den Bräunling (72) zu dem beweglichen Boden (40) der Sintereinheit (4) zu transportieren.

11. Vorrichtung nach Anspruch 10, **dadurch gekennzeichnet, dass** der bewegliche Boden (40) einen hermetisch abdichtenden Rand (41) aufweist, der nach Einbringen des Bräunlings (72) in die Sintereinheit (4) die Sintereinheit (4) gegenüber der Prozesskammer (1) hermetisch abgedichtet.

12. Vorrichtung nach Anspruch 10 oder 11, **dadurch gekennzeichnet, dass** der bewegliche Boden (40) in vertikaler Richtung verfahrbar ist, wobei die Sintereinheit (4) oberhalb oder unterhalb der Prozesskammer (1) angeordnet ist.

13. Vorrichtung nach einem der vorangehenden Ansprüche, **dadurch gekennzeichnet, dass** die Prozesskammer (1) eine Transferebene (80) aufweist, in der der Grünling (71), der Bräunling (72) sowie das gesinterte Teil (73) von Bearbeitungsstationen zu Bearbeitungsstation bzw. zum Ausgang transportiert werden.

14. Vorrichtung nach einem der vorangehenden Ansprüche, **dadurch gekennzeichnet, dass** die Vorrichtung dazu eingerichtet ist, den Grünling (71) und den Bräunling (72) auf derselben Transportunterlage (21) zwischen den einzelnen Einheiten (2, 3, 4) der Prozesskammer zu transportieren.

15. Vorrichtung zur Herstellung metallischer oder keramischer Teile, die aufweist:
- eine Druckereinheit (2), in der mindestens ein Filament (6), das aus einem Metall- oder Keramikpulver vermischt mit einem Binder besteht, schichtweise zu einem metallischen oder keramischen Grünling (71) gefertigt wird, und
- eine Sintereinheit (4), in der der Grünling (71) zu dem herzustellenden Teil (73) gesintert wird,
**gekennzeichnet durch**
eine hermetisch geschlossene Prozesskammer (1), wobei
- die Druckereinheit (2) in der Prozesskammer (1) angeordnet ist,
- die Sintereinheit (4) derart an die Prozesskammer angeschlossen (1) ist, dass der Grünling (71) von der Prozesskammer (1) aus in die Sintereinheit (4) einführbar und aus dieser wieder entnehmbar ist, ohne in Kontakt mit der Umgebung zu treten, und wobei
- in die Prozesskammer (1) Transportmittel integriert sind zum Transport des Grünlings (71) von der Druckereinheit (2) zur Sintereinheit (4) und zum Transport des gesinterten Teils (73) zu einem Ausgang (12) der Prozesskammer (1).
